# EUROPEAN PATENT APPLICATION

(11) **EP 4 610 403 A1**
(43) Date of publication of application: **03.09.2025**
(21) Application number: 23911319.4
(22) Date of filing: 06.10.2023
(51) Int. Cl.: C25B 11/053, C25B 9/00, C25B 9/23, C25B 1/04

(54) **MEMBRANE ELECTRODE ASSEMBLY AND METHOD FOR MANUFACTURING MEMBRANE ELECTRODE ASSEMBLY**

(30) Priority: 27.12.2022 JP 2022209779
(71) Applicant: Mitsubishi Heavy Industries, Ltd., Tokyo 100-8332 (JP)
(72) Inventor: MUKAI, Daisuke, Tokyo 100-8332 (JP); MIYOSHI,Takahito, Tokyo 100-8332 (JP); SUKENOBU,Takahiro, Tokyo 100-8332 (JP); TAGAMI, Naoto, Tokyo 100-8332 (JP); INABA, Kosuke, Tokyo 100-8332 (JP); FURUKAWA, Shoichi, Tokyo 100-8332 (JP); TSURUMAKI, Shigeru, Tokyo 100-8332 (JP)
(74) Representative: Studio Torta S.p.A.
(86) International application number: PCT/JP2023/036552
(87) International publication number: WO 2024/142535

(57) **Abstract**

Provided are a membrane electrode assembly that can suppress unevenness of contact resistance (variation within a surface) and local current concentration and a method for manufacturing a membrane electrode assembly. [Solution] This membrane electrode assembly comprises: an ion exchange membrane having a first surface and a second surface located on the opposite side of the first surface; a cathode catalyst layer disposed further to the first surface side than the ion exchange membrane; an anode catalyst layer disposed further to the second surface side than the ion exchange membrane; and an ionomer layer provided so as to be separate from the cathode catalyst layer and the anode catalyst layer between the ion exchange membrane and the cathode catalyst layer and between the ion exchange membrane and the anode catalyst layer, the ionomer layer forming a layered structure together with the cathode catalyst layer and the anode catalyst layer.

## Description

### Technical Field

The present disclosure relates to a membrane electrode assembly and a method for manufacturing the membrane electrode assembly.

The present application claims priority based on Japanese Patent Application No. 2022-209779 filed on December 27, 2022, the contents of which are incorporated herein by reference.

### Background Art

Patent Literature 1 discloses a membrane electrode assembly (MEA) in which two electrodes including an electrode base and an electrode catalyst layer are prepared, and a polymer electrolyte membrane (ion exchange membrane) is disposed between the two electrodes. In the membrane electrode assembly, the electrode catalyst layer of each electrode is disposed so as to oppose the polymer electrolyte membrane, and the polymer electrolyte membrane is joined in a state where the two electrodes hold the proton exchange membrane.

### Citation List

### Patent Literature

Patent Literature 1: JP 4734688 A

### Summary of Invention

### Technical Problem

When an electrode catalyst layer is formed by coating or the like, the surface of the electrode catalyst layer to be joined to a polymer electrolyte membrane may be roughly formed. In this case, in the membrane electrode assembly, a part where the electrode catalyst layer is in close contact with the polymer electrolyte membrane and a part where the electrode catalyst layer is not in close contact with the polymer electrolyte membrane may exist sparsely due to the surface roughness of the electrode catalyst layer. As a result, the contact resistance concentrates on the part in close contact, and a part locally having a high current density is generated, which has a problem in durability as a water electrolyzer.

The present disclosure has been made to solve the above problems, and can configure a membrane electrode assembly having durability by having a structure in which a catalyst layer and an anion exchange membrane are in close contact with each other, having no variation in ionic conductivity, and having an even electrolytic surface, and an object of the present disclosure is to provide a membrane electrode assembly that can suppress concentration of contact resistance, and a method for manufacturing the membrane electrode assembly.

### Solution to Problem

In order to solve the above problems, a membrane electrode assembly according to the present disclosure includes: an ion exchange membrane having a first surface and a second surface positioned on an opposite side of the first surface; a cathode catalyst layer disposed further to the first surface side than the ion exchange membrane; an anode catalyst layer disposed further to the second surface side than the ion exchange membrane; and an ionomer layer provided so as to be separate from the cathode catalyst layer and the anode catalyst layer between the ion exchange membrane and the cathode catalyst layer and between the ion exchange membrane and the anode catalyst layer, the ionomer layer forming a layered structure together with the cathode catalyst layer and the anode catalyst layer.

A method for manufacturing a membrane electrode assembly according to the present disclosure executes: a step of providing an ionomer layer on each of a cathode catalyst layer formed on one surface of a cathode feed conductor and an anode catalyst layer formed on one surface of an anode feed conductor, the ionomer layer being separate from the cathode catalyst layer and the anode catalyst layer; and a step of forming a layered structure by stacking the ionomer layer provided on the cathode catalyst layer on a first surface of an ion exchange membrane, stacking the ionomer layer provided on the anode catalyst layer on a second surface of the ion exchange membrane, the second surface being positioned on an opposite side of the first surface, and performing hot or cold pressing.

A method for manufacturing a membrane electrode assembly according to the present disclosure executes: a step of providing an ionomer layer on each of a first surface of an ion exchange membrane and a second surface of the ion exchange membrane, the second surface being positioned on an opposite side of the first surface, and a step of forming a layered structure by stacking a cathode catalyst layer provided on one surface of a cathode feed conductor on the ionomer layer provided on the first surface of the ion exchange membrane so as to be separate from the ionomer layer, stacking an anode catalyst layer provided on one surface of an anode feed conductor on the ionomer layer provided on the second surface of the ion exchange membrane so as to be separate from the ionomer layer, and performing hot or cold pressing.

### Advantageous Effects of Invention

According to the present disclosure, it is possible to provide a membrane electrode assembly that can suppress concentration of contact resistance, and a method for manufacturing the membrane electrode assembly.

### Brief Description of Drawings

[FIG. 1] A schematic configuration diagram illustrating an overall configuration of an electrolyzer according to a first embodiment of the present disclosure.
[FIG. 2] A view schematically illustrating an electrolytic cell according to the first embodiment of the present disclosure.
[FIG. 3] An exploded perspective view illustrating the electrolytic cell according to the first embodiment of the present disclosure.
[FIG. 4] A cross-sectional view illustrating the electrolytic cell according to the first embodiment of the present disclosure.
[FIG. 5] A cross-sectional view illustrating a method for manufacturing a membrane electrode assembly according to the first embodiment of the present disclosure.
[FIG. 6] A cross-sectional view illustrating a method for manufacturing a membrane electrode assembly according to a second embodiment of the present disclosure.

### Description of Embodiments

Hereinafter, an electrolyzer 1 of an embodiment of the present disclosure and a method for manufacturing a membrane electrode assembly 43 of the electrolyzer 1 will be described with reference to the drawings. In the following description, configurations having identical or similar functions are denoted with identical reference signs. In the present description, "oppose" means that two members are stacked when viewed in a certain direction, and can include a case where another member (e.g., another layer) exists between the two members.

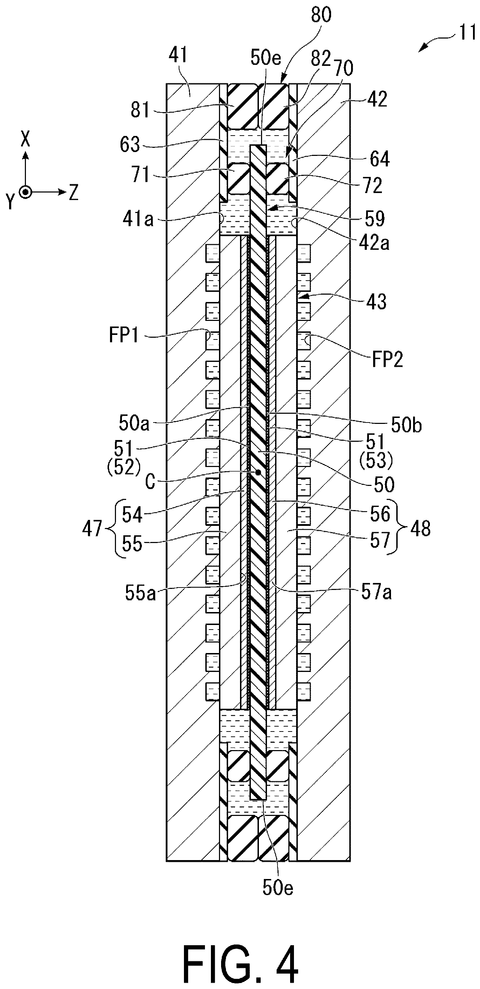

First, a Z direction, an X direction, and a Y direction are defined with reference to FIG. 4. The Z direction is a direction (left-right direction in FIG. 4) from the first separator 41 toward the second separator 42 described later. The Z direction is also a layering direction when an ion exchange membrane 50, an ionomer layer 51, a cathode catalyst layer 54, and an anode catalyst layer 56 of the membrane electrode assembly 43 described later form a layered structure. The X direction is a direction intersecting (e.g., orthogonal to) the Z direction, and is a direction from a central portion C of the membrane electrode assembly 43 toward one end portion of the membrane electrode assembly 43 (up-down direction in FIG. 4). The Y direction is a direction intersecting (e.g., orthogonal to) the Z direction and the X direction, and is the depth direction in FIG. 4, for example. The "area" in the present description means an area when viewed in the Z direction (i.e., an area extending in the X direction and the Y direction). The "outer size" in the present description means an outer size when viewed in the Z direction. That is, the "outer size" and the "area" mean substantially the same in some cases, and may be read exchangeably as appropriate.

### First Embodiment

### Configuration of Electrolyzer

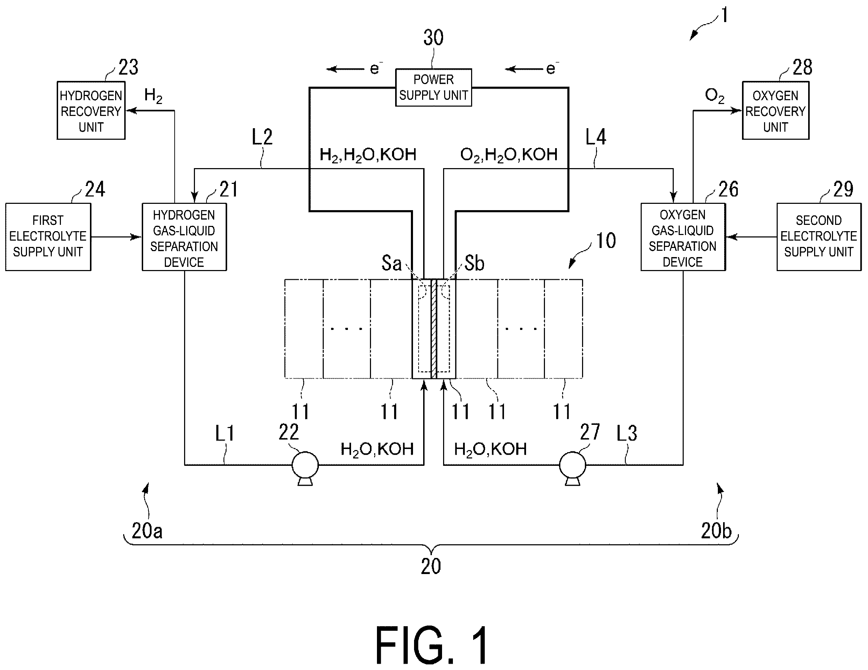

FIG. 1 is a schematic configuration diagram illustrating an overall configuration of the electrolyzer 1 of the first embodiment. The electrolyzer 1 is a device that generates hydrogen by electrolyzing water contained in an electrolyte, for example. The electrolyzer 1 is an electrolyzer of an anion exchange membrane (AEM) type, for example. However, the electrolyzer 1 is not limited to the above example, and may be of different types of electrolyzers such as an electrolyzer of a polymer electrolyte membrane (PEM) type and a device that electrolytically reduces carbon dioxide.

The electrolyzer 1 includes, for example, an electrolytic cell stack 10, an electrolyte supply unit 20, and a power supply unit 30.

### Electrolytic Cell Stack

The electrolytic cell stack 10 is an aggregate of a plurality of electrolytic cells 11. For example, the electrolytic cell stack 10 is formed by arranging the plurality of electrolytic cells 11 in one direction. Each of the electrolytic cells 11 includes a cathode chamber Sa and an anode chamber Sb. The electrolytic cell 11 will be described in detail below.

### Electrolyte Supply Unit

The electrolyte supply unit 20 is a supply unit that supplies an electrolyte to each of the electrolytic cells 11. The electrolyte is, for example, pure water or an alkaline aqueous solution. The electrolyte supply unit 20 includes a cathode side supply unit 20a and an anode side supply unit 20b.

The cathode side supply unit 20a is a supply unit that supplies an electrolyte to the cathode chamber Sa of each of the electrolytic cells 11. The cathode side supply unit 20a includes, for example, a hydrogen gas-liquid separation device 21, a first pump 22, a hydrogen recovery unit 23, a first electrolyte supply unit 24, and pipe lines L1 and L2.

The hydrogen gas-liquid separation device 21 stores an electrolyte. A supply port of the hydrogen gas-liquid separation device 21 is connected to the cathode chamber Sa of the electrolytic cell 11 via the pipe line L1. The first pump 22 is provided in the middle of the pipe line L1, and sends the electrolyte stored in the hydrogen gas-liquid separation device 21 toward the cathode chamber Sa of the electrolytic cell 11.

A return port of the hydrogen gas-liquid separation device 21 is connected to the cathode chamber Sa of the electrolytic cell 11 via the pipe line L2. An electrolyte containing hydrogen generated in the electrolytic cell 11 flows into the hydrogen gas-liquid separation device 21 from the electrolytic cell 11. The hydrogen gas-liquid separation device 21 includes a gas-liquid separation unit that separates hydrogen contained in the electrolyte. The hydrogen separated from the electrolyte by the hydrogen gas-liquid separation device 21 is recovered by the hydrogen recovery unit 23. The hydrogen gas-liquid separation device 21 is supplemented with an electrolyte from the first electrolyte supply unit 24.

On the other hand, the anode side supply unit 20b is a supply unit that supplies an electrolyte to the anode chamber Sb of each of the electrolytic cells 11. The anode side supply unit 20b includes, for example, an oxygen gas-liquid separation device 26, a second pump 27, an oxygen recovery unit 28, a second electrolyte supply unit 29, and pipe lines L3 and L4.

The oxygen gas-liquid separation device 26 stores an electrolyte. A supply port of the oxygen gas-liquid separation device 26 is connected to the anode chamber Sb of the electrolytic cell 11 via the pipe line L3. The second pump 27 is provided in the middle of the pipe line L3, and sends the electrolyte stored in the oxygen gas-liquid separation device 26 toward the anode chamber Sb of the electrolytic cell 11.

A return port of the oxygen gas-liquid separation device 26 is connected to the anode chamber Sb of the electrolytic cell 11 via the pipe line L4. An electrolyte containing oxygen generated in the electrolytic cell 11 flows into the oxygen gas-liquid separation device 26 from the electrolytic cell 11. The oxygen gas-liquid separation device 26 includes a gas-liquid separation unit that separates oxygen contained in the electrolyte. The oxygen separated from the electrolyte by the oxygen gas-liquid separation device 26 is recovered by the oxygen recovery unit 28. The oxygen gas-liquid separation device 26 is supplemented with an electrolyte from the second electrolyte supply unit 29.

### Power Supply Unit

The power supply unit 30 is a direct current power supply device that applies a voltage to the electrolytic cell 11. The power supply unit 30 applies a direct current voltage necessary for electrolysis of the electrolyte between the anode and the cathode of the electrolytic cell 11.

### Configuration of Electrolytic Cell

Next, the electrolytic cell 11 will be described in detail.

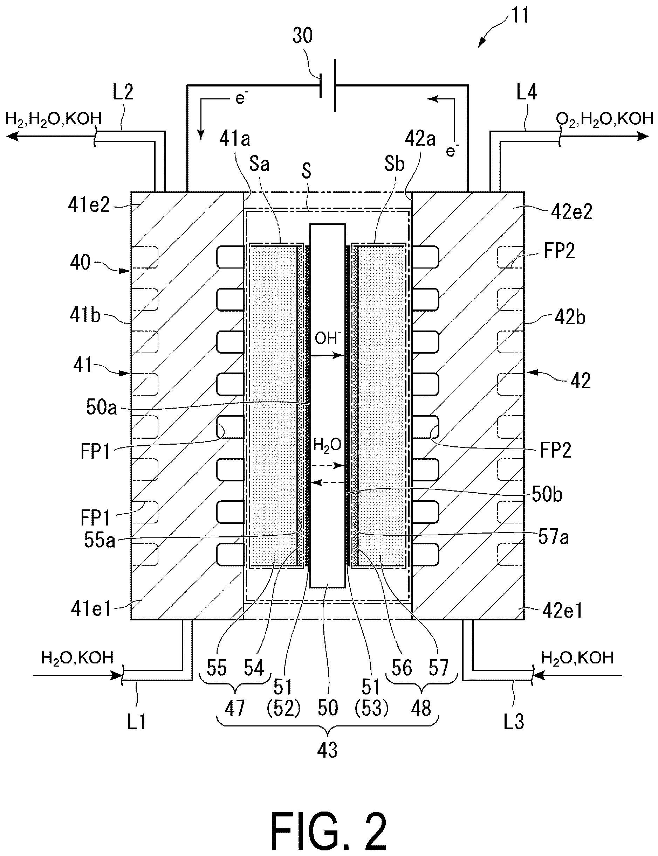

FIG. 2 is a cross-sectional view schematically illustrating the electrolytic cell 11. The electrolytic cell 11 includes, for example, the first separator 41, the second separator 42, and the membrane electrode assembly 43.

### First Separator

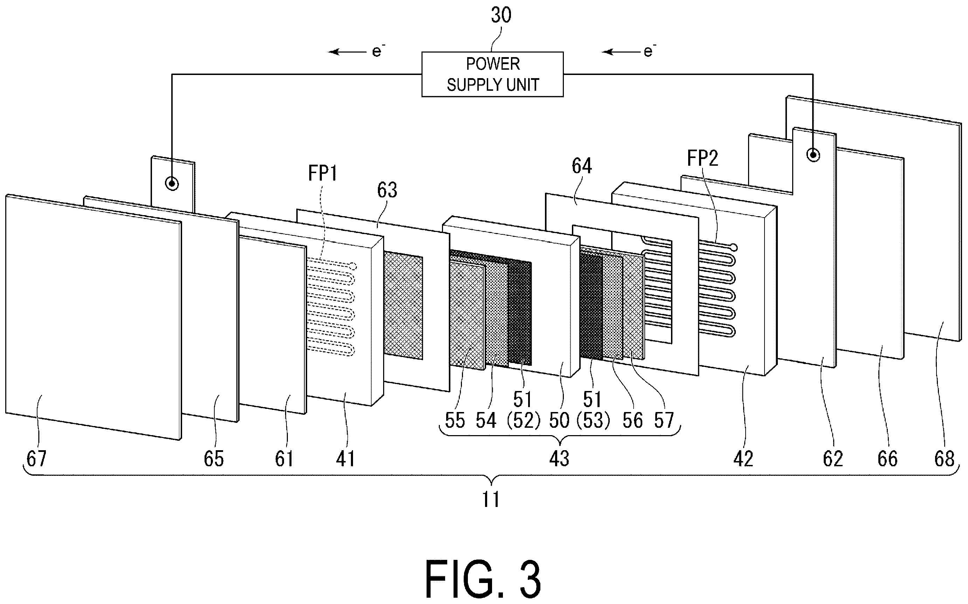

The first separator 41 is a member defining one surface of an internal space S of the electrolytic cell 11. The internal space S is a space including the cathode chamber Sa and the anode chamber Sb described later. The first separator 41 has, for example, a rectangular plate shape, and is formed of a metal member such as stainless steel, titanium, or nickel, a conductive carbon plate, a conductive carbon plate sealed with a mold resin, or the like. The first separator 41 is applied with a negative voltage from the power supply unit 30 via a first current collector 61 (see FIG. 3) described later, for example.

The first separator 41 has a first separator end portion 41e1 (e.g., a lower end portion) and a second separator end portion 41e2 (e.g., an upper end portion) positioned on an opposite side of the first separator end portion 41e1. The pipe line L1 described above is connected to the first separator end portion 41e1 of the first separator 41. The pipe line L2 described above is connected to the second separator end portion 41e2 of the first separator 41. The first separator 41 has a first inner surface 41a facing the cathode chamber Sa described later. On the first inner surface 41a, a first flow path FP1 through which the electrolyte supplied from the pipe line L1 flows is formed. The first flow path FP1 is, for example, a channel provided on the first inner surface 41a. The electrolyte having flowed through the first flow path FP1 is discharged to the outside of the electrolytic cell 11 through the pipe line L2. Note that each structure (e.g., a flow path structure) illustrated in FIG. 2 is merely an example and does not limit the content of the present embodiment. For example, for the flow path structure, various structures can be used according to the size, purpose, use environment of the device, and the like. The same applies to each structure illustrated in other drawings.

### Second Separator

The second separator 42 is a member disposed with the internal space S between the second separator 42 and at least a part of the first separator 41 and defining the other surface of the internal space S. The second separator 42 has, for example, a rectangular plate shape, and is formed of a metal member such as stainless steel, titanium, or nickel. The second separator 42 is applied with a positive voltage from the power supply unit 30 via a second current collector 62 (see FIG. 3) described later. The first separator 41 and the second separator 42 included in the same electrolytic cell 11 form an electrolytic tank 40 of the electrolytic cell 11 as a pair of separators.

The second separator 42 has a first separator end portion 42e1 (e.g., a lower end portion) and a second separator end portion 42e2 (e.g., an upper end portion) positioned on an opposite side of the first separator end portion 42e1. The pipe line L3 described above is connected to the first separator end portion 42e1 of the second separator 42. The pipe line L4 described above is connected to the second separator end portion 42e2 of the second separator 42. The second separator 42 has a second inner surface 42a facing the anode chamber Sb described later. On the second inner surface 42a, a second flow path FP2 through which the electrolyte supplied from pipe line L3 flows is formed. The second flow path FP2 is, for example, a channel provided on the second inner surface 42a. The electrolyte having flowed through the second flow path FP2 is discharged to the outside of the electrolytic cell 11 through the pipe line L4.

Note that for convenience of description, a description is made regarding a configuration in which the first inner surface 41a of the first separator 41 has a flow path channel (first flow path FP1) and the second inner surface 42a of the second separator 42 has a flow path channel (second flow path FP2). However, for example, the first separator 41 of the electrolytic cell 11 included in the electrolytic cell stack 10 (see FIG. 1) may be a bipolar plate having a similar flow path channel (the first flow path FP1, indicated by two-dot chain line in FIG. 2) on a surface 41b on an opposite side of the first inner surface 41a in addition to the first inner surface 41a. The second separator 42 of the electrolytic cell 11 included in the electrolytic cell stack 10 may be a bipolar plate having a similar flow path channel (the second flow path FP2, indicated by two-dot chain line in FIG. 2) on a surface 42b on an opposite side of the second inner surface 42a in addition to the second inner surface 42a. Note that the flow path channels provided on both surfaces of the first separator 41 may have shapes and arrangements different from each other. The flow path channels provided on both surfaces of the second separator 42 may have shapes and arrangements different from each other.

### Configuration of Membrane Electrode Assembly

The membrane electrode assembly (MEA) 43 is a structure in which an ion exchange membrane, a catalyst, and a feed conductor are assembled. The membrane electrode assembly 43 is disposed between the first separator 41 and the second separator 42, and is positioned in the internal space S. The membrane electrode assembly 43 includes, for example, the ion exchange membrane 50, the ionomer layer 51, the cathode catalyst layer 54, a cathode feed conductor 55, the anode catalyst layer 56, and an anode feed conductor 57.

### Ion Exchange Membrane

The ion exchange membrane 50 is a membrane that selectively transmits ions. The ion exchange membrane 50 is, for example, a solid proton electrolyte membrane. The ion exchange membrane 50 is, for example, an anion exchange membrane (AEM) having hydroxide ion conductivity. However, the ion exchange membrane 50 is not limited to the above example, and may be an ion exchange membrane of a type different from the above example, for example, a polymer electrolyte membrane (PEM). The ion exchange membrane 50 has, for example, a rectangular sheet shape. The outer size of the ion exchange membrane 50 is smaller than the outer size of the first separator 41 or the second separator 42. The ion exchange membrane 50 is disposed between the first separator 41 and the second separator 42, and is positioned in the internal space S described above. The ion exchange membrane 50 has a first surface 50a opposing the first inner surface 41a of the first separator 41, and a second surface 50b positioned on an opposite side of the first surface 50a. The second surface 50b of the ion exchange membrane 50 opposes the second inner surface 42a of the second separator 42. In the internal space S, the cathode chamber Sa is defined between the first surface 50a of the ion exchange membrane 50 and the first inner surface 41a of the first separator 41. In the internal space S, the anode chamber Sb is defined between the second surface 50b of the ion exchange membrane 50 and the second inner surface 42a of the second separator 42.

In the cathode chamber Sa, when a voltage is applied to the electrolytic cell 11, a chemical reaction shown below (Chemical Formula 1) occurs, and hydrogen is generated from the electrolyte. Note that "XX is produced" in the present description can include a case where other substances are simultaneously produced along with the production of XX. The hydroxide ions generated in the cathode chamber Sa pass through the membrane electrode assembly 43 and move from the cathode chamber Sa to the anode chamber Sb.

2H₂O + 2e⁻→H₂ + 2OH⁻... (Chemical Formula 1)

In the anode chamber Sb, when a voltage is applied to the electrolytic cell 11, a chemical reaction shown below (Chemical Formula 2) occurs, and oxygen is generated from the electrolyte.

2OH⁻→1/2O₂ + H₂O + 2e⁻... (Chemical Formula 2)

By this, when the entire electrolytic cell 11 is viewed, a chemical reaction shown below (Chemical Formula 3) occurs. H₂O → H₂ + 1/2O₂... (Chemical Formula 3)

As an example of a membrane having high ion conductivity, the ion exchange membrane 50 may contain a polystyrene-based or tetraphenyl-based composition in the main chain, and may include an imidazolium group or a quaternary ammonium group in the side chain. On the other hand, in place of this, as an example of a membrane having high oxidation resistance, the ion exchange membrane 50 may contain a polysulfone-based or bromobutylstyrene-based composition.

### Ionomer Layer

The ionomer layer 51 is a layer provided in the ion exchange membrane 50. The ionomer layer 51 is a layer through which hydroxide ions can pass. The ionomer layer 51 has, for example, a rectangular sheet shape. In the present embodiment, the outside diameter size of the ionomer layer 51 is smaller than the outside diameter size of the ion exchange membrane 50. The ionomer layer 51 has a thickness of, for example, 1 nm or more and 10 µm or less.

In the present embodiment, the ionomer layer 51 includes an ionomer resin component and a non-ionomer resin component different from the ionomer resin component. The ionomer resin component contains, for example, Diaza (bicyclo-octane) polyethersulfone, or poly[(p-terphenyl-4,4'-diyl) (N,N-dimethyl-piperidinium-bicarbonate-4,4-diyl)-co-(p-terphenyl-4,4'-diyl) (2,2,2-trifluoro-1-phenylethylidene-diyl)], or poly[(p-terphenyl-4,4'-diyl) (N,N-dimethyl-piperidinium-bicarbonate-4,4-diyl)]. In the present embodiment, the ionomer resin component may contain an additive because a predetermined polymer compound is added at the time of manufacturing, for example. The ionomer resin component is contained in the ionomer layer 51 at a proportion of 80 mass% or more and less than 100 mass%. The non-ionomer resin component contains an electrocatalyst particle and a binder. Cathode catalyst particles include, for example, one or more of nickel, a nickel alloy, cerium oxide, lanthanum oxide, and platinum. Note that the "∘∘ oxide" in the present disclosure is employed even though ∘∘ and another material other than oxygen can be contained. The anode catalyst contains one or more of nickel, a nickel alloy, a nickel oxide, a copper oxide, an iridium oxide, a niobium oxide, a lead oxide, and a bismuth oxide. As described above, the "XX oxide" in the present disclosure can contain another material other than XX and oxygen.

For anode catalyst particles, the "nickel oxide" can contain another material such as iron and cobalt other than nickel and oxygen. The "copper oxide" can contain another material such as cobalt other than copper and oxygen. The "iridium oxide" can contain another material such as ruthenium other than iridium and oxygen. The "lead oxide" can contain another material such as ruthenium other than lead and oxygen. The "bismuth oxide" can contain another material such as ruthenium other than bismuth and oxygen. As the binder, for example, a fluorine-based binder such as polytetrafluoroethylene (PTFE), polyvinylidene fluoride (PVDF), tetrafluoroethylene-perfluoroalkyl vinyl ether copolymer (PFA), tetrafluoroethylene-hexafluoropropylene copolymer (FEP), or tetrafluoroethylene-ethylene copolymer (ETFE) is employed.

The ionomer layer 51 is provided, for example, over the entire first surface 50a of the ion exchange membrane 50 and over the entire second surface 50b of the ion exchange membrane 50. Hereinafter, for convenience of description, the ionomer layer 51 provided on the first surface 50a of the ion exchange membrane 50 is called a "first ionomer layer 52", and the ionomer layer 51 provided on the second surface 50b of the ion exchange membrane 50 is called a "second ionomer layer 53". In the present embodiment, the outside diameter size of the first ionomer layer 52 and the outside diameter size of the second ionomer layer 53 are the same. The thickness of the first ionomer layer 52 and the thickness of the second ionomer layer 53 are the same. The first ionomer layer 52 is disposed in the cathode chamber Sa and joined to the first surface 50a of the ion exchange membrane 50. The second ionomer layer 53 is disposed in the anode chamber Sb and joined to the second surface 50b of the ion exchange membrane 50.

### Cathode Catalyst Layer

The cathode catalyst layer 54 is a layer that promotes the chemical reaction in the cathode chamber Sa described above. The cathode catalyst layer 54 has, for example, a rectangular sheet shape. In the present embodiment, the cathode catalyst layer 54 is formed to have the same outer size as that of the first ionomer layer 52, for example. The cathode catalyst layer 54 is disposed in the cathode chamber Sa, and is provided over the entire first ionomer layer 52. The cathode catalyst layer 54 is applied with a negative voltage from the power supply unit 30 via the first separator 41 and the cathode feed conductor 55, and functions as a part of a cathode 47 of the electrolytic cell 11.

The cathode catalyst layer 54 may be made of any material as long as the material promotes the chemical reaction in the cathode chamber Sa described above, and various materials can be used. For example, the cathode catalyst layer 54 contains one or more of nickel, a nickel alloy, cerium oxide, lanthanum oxide, and platinum. Note that the " ∘∘ oxide" in the present description can contain another material other than ∘∘ and oxygen. The cathode catalyst layer 54 is formed by adding the additive during manufacturing. That is, the cathode catalyst layer 54 contains the above-described additive. Note that the cathode catalyst layer 54 may contain another material such as carbon in addition to the above-described materials.

### Cathode Feed Conductor

The cathode feed conductor 55 is an electrical connection portion that transmits the voltage applied to the first separator 41 to the cathode catalyst layer 54. The cathode feed conductor 55 is disposed in the cathode chamber Sa. The cathode feed conductor 55 is positioned between the first inner surface 41a of the first separator 41 and the cathode catalyst layer 54, and is joined to the first inner surface 41a of the first separator 41 and the cathode catalyst layer 54. The cathode catalyst layer 54 is formed on a surface of the cathode feed conductor 55 facing the ion exchange membrane 50. Hereinafter, the surface of the cathode feed conductor 55 on which the cathode catalyst layer 54 is formed is called a "cathode surface 55a". The cathode surface 55a is an example of one surface of the cathode feed conductor 55. Note that at least a part of the cathode feed conductor 55 may be stacked on at least a part of at least one of the first separator 41 and the cathode catalyst layer 54. The cathode feed conductor 55 has a structure through which an electrolyte and a gas can pass. The cathode feed conductor 55 is formed of, for example, a metal mesh structure, a sintered body, a fiber or conductive carbon fiber mesh structure, or a nonwoven fabric. In the present embodiment, the outer size of the cathode feed conductor 55 is the same as the outer size of the cathode catalyst layer 54. In the present embodiment, the cathode catalyst layer 54 and the cathode feed conductor 55 form the cathode 47 of the electrolytic cell 11.

### Anode Catalyst Layer

The anode catalyst layer 56 is a layer that promotes the chemical reaction in the anode chamber Sb described above. The anode catalyst layer 56 has, for example, a rectangular sheet shape. In the present embodiment, the anode catalyst layer 56 is formed to have the same outer size as that of the second ionomer layer 53. The anode catalyst layer 56 is disposed in the anode chamber Sb, and is provided over the entire second ionomer layer 53. The anode catalyst layer 56 is applied with a positive voltage from the power supply unit 30 via the second separator 42 and the anode feed conductor 57, and functions as a part of an anode 48 of the electrolytic cell 11. In the present embodiment, the anode catalyst layer 56 is formed to have the same thickness as that of the cathode catalyst layer 54.

The anode catalyst layer 56 may be made of any material as long as the material promotes the chemical reaction in the anode chamber Sb described above, and various materials can be used. For example, the anode catalyst layer 56 contains one or more of nickel, a nickel alloy, a nickel oxide, a copper oxide, an iridium oxide, a niobium oxide, a lead oxide, and a bismuth oxide. As described above, the "XX oxide" in the present description can contain another material other than XX and oxygen. For example, the "nickel oxide" can contain another material such as iron and cobalt other than nickel and oxygen. The "copper oxide" can contain another material such as cobalt other than copper and oxygen. The "iridium oxide" can contain another material such as ruthenium other than iridium and oxygen. The "lead oxide" can contain another material such as ruthenium other than lead and oxygen. The "bismuth oxide" can contain another material such as ruthenium other than bismuth and oxygen. The anode catalyst layer 56 is formed by adding the additive during manufacturing. That is, the anode catalyst layer 56 contains the above-described additive.

Therefore, the ionomer layer 51 (the first ionomer layer 52 and the second ionomer layer 53) described above is provided as a separate body from the cathode catalyst layer 54 and the anode catalyst layer 56 between the ion exchange membrane 50 and the cathode catalyst layer 54 and between the ion exchange membrane 50 and the anode catalyst layer 56, and forms a layered structure together with the ion exchange membrane 50, the cathode catalyst layer 54, and the anode catalyst layer 56. That is, boundary surfaces exist between the first ionomer layer 52 and the cathode catalyst layer 54 and between the second ionomer layer 53 and the anode catalyst layer 56. Boundary surfaces exist between the first ionomer layer 52 and the ion exchange membrane 50 and between the second ionomer layer 53 and the ion exchange membrane 50. In the present embodiment, the thickness of the ionomer layer 51 (the first ionomer layer 52 and the second ionomer layer 53) is 10% or more and 50% or less of the thickness of the cathode catalyst layer 54 and the thickness of the anode catalyst layer 56. The thickness of the first ionomer layer 52 is 10% or more and 50% or less of the thickness of the cathode catalyst layer 54, and the thickness of the second ionomer layer 53 is 10% or more and 50% or less of the thickness of the anode catalyst layer 56.

### Anode Feed Conductor

The anode feed conductor 57 is an electrical connection portion that transmits the voltage applied to the second separator 42 to the anode catalyst layer 56. The anode feed conductor 57 is disposed in the anode chamber Sb. The anode feed conductor 57 is positioned between the second inner surface 42a of the second separator 42 and the anode catalyst layer 56, and is joined to the second inner surface 42a of the second separator 42 and the anode catalyst layer 56. The anode catalyst layer 56 is formed on a surface of the anode feed conductor 57 facing the ion exchange membrane 50. Hereinafter, the surface of the anode feed conductor 57 on which the anode catalyst layer 56 is formed is called an "anode surface 57a". The anode surface 57a is an example of one surface of the anode feed conductor 57. Note that at least a part of the anode feed conductor 57 may be stacked on at least a part of at least one of the second separator 42 and the anode catalyst layer 56. The anode feed conductor 57 has a structure through which an electrolyte and a gas can pass. The anode feed conductor 57 is formed of, for example, a metal mesh structure, a sintered body, or a fiber. In the present embodiment, the outer size of the anode feed conductor 57 is the same as the outer size of the anode catalyst layer 56. In the present embodiment, the anode catalyst layer 56 and the anode feed conductor 57 form the anode 48 of the electrolytic cell 11.

FIG. 3 is an exploded perspective view illustrating the electrolytic cell 11. In addition to the above-described configuration, the electrolytic cell 11 includes, for example, a first current collector 61, a second current collector 62, a first insulator 63, a second insulator 64, a first insulation material 65, a second insulation material 66, a first end plate 67, and a second end plate 68. Note that in FIG. 3, for convenience of description, illustration of a support portion 70 and a sealing portion 80 described later is omitted.

### First Current Collector

The first current collector 61 is an electrical connection portion that transmits, to the first separator 41, the negative voltage applied from the power supply unit 30. The first current collector 61 is a metal plate member (e.g., a copper plate). The first current collector 61 is in contact with the first separator 41 from the opposite side of the internal space S of the electrolytic cell 11, for example, and is electrically connected to the first separator 41. The first current collector 61 is applied, from the power supply unit 30, with a negative voltage necessary for electrolysis in the electrolytic cell 11. Note that the first current collector 61 may be shared by two electrolytic cells 11 adjacent to each other in the electrolytic cell stack 10.

### Second Current Collector

The second current collector 62 is an electrical connection portion that transmits, to the second separator 42, the positive voltage applied from the power supply unit 30. The second current collector 62 is a metal plate member (e.g., a copper plate). The second current collector 62 is in contact with the second separator 42 from the opposite side of the internal space S of the electrolytic cell 11, for example, and is electrically connected to the second separator 42. The second current collector 62 is applied, from the power supply unit 30, with a positive voltage necessary for electrolysis in the electrolytic cell 11. Note that the second current collector 62 may be shared by two electrolytic cells 11 adjacent to each other in the electrolytic cell stack 10.

### First Insulator

The first insulator 63 is a member that insulates between the outer peripheral portion of the first separator 41 and the outer peripheral portion of the second separator 42. The first insulator 63 is a sheet member having a frame shape slightly larger than the outer shape of the cathode catalyst layer 54 and the outer shape of the cathode feed conductor 55. The first insulator 63 is attached to the first inner surface 41a of the first separator 41 and covers an end portion of the first inner surface 41a. The material of the first insulator 63 is not particularly limited as long as it is an insulation material, and is, for example, a resin having a sheet shape such as polytetrafluoroethylene (PTFE).

### Second Insulator

Similarly to the first insulator 63, the second insulator 64 is a member that insulates between the outer peripheral portion of the first separator 41 and the outer peripheral portion of the second separator 42. The second insulator 64 is a sheet member having a frame shape slightly larger than the outer shape of the anode catalyst layer 56 and the outer shape of the anode feed conductor 57. The second insulator 64 is attached to the second inner surface 42a of the second separator 42 and covers an end portion of the second inner surface 42a. The material of the second insulator 64 is not particularly limited as long as it is an insulation material, and is, for example, a resin having a sheet shape such as PTFE. The first insulator 63 and the second insulator 64 can also be used as an integrated insulator.

### First Insulation Material

The first insulation material 65 is positioned between the first current collector 61 and the first end plate 67. The outer size of the first insulation material 65 is, for example, the same as the outer size of the first current collector 61 or larger than the outer size of the first current collector 61.

### Second Insulation Material

The second insulation material 66 is positioned between the second current collector 62 and the second end plate 68. The outer size of the second insulation material 66 is, for example, the same as the outer size of the second current collector 62 or larger than the outer size of the second current collector 62.

### First End Plate

The first end plate 67 is positioned on an opposite side of the first insulation material 65 with respect to the internal space S of the electrolytic cell 11. The outer size of the first end plate 67 is larger than the outer size of the first insulation material 65, for example.

### Second End Plate

The second end plate 68 is positioned on an opposite side of the second insulation material 66 with respect to the internal space S of the electrolytic cell 11. The outer size of the second end plate 68 is larger than the outer size of the second insulation material 66, for example.

Note that the electrolytic cell 11 is not limited to the above-described configuration. For example, when the electrolytic cell stack 10 is configured by arranging a plurality of the electrolytic cells 11 side by side, two adjacent electrolytic cells 11 among the plurality of electrolytic cells 11 may share the first separator 41 or the second separator 42, each of which is a bipolar plate. In this case, no current collector (the first current collector 61 or the second current collector 62), no insulator (the first insulator 63 or the second insulator 64), no insulator (the first insulation material 65 or the second insulation material 66), and no end plate (the first end plate 67 or the second end plate 68) may exist between two adjacent electrolytic cells 11.

### Structure of Outer Peripheral Portion of Electrolytic Cell

FIG. 4 is a cross-sectional view illustrating the electrolytic cell 11. In the present embodiment, the outer size of the ion exchange membrane 50 is larger than each of the outer size of the cathode catalyst layer 54 and the outer size of the cathode feed conductor 55. In other words, the area of the ion exchange membrane 50 is larger than each of the area of the cathode catalyst layer 54 and the area of the cathode feed conductor 55. The ion exchange membrane 50 protrudes more outside (outer peripheral side) than the cathode catalyst layer 54 and the cathode feed conductor 55 in a direction (e.g., the X direction or the Y direction) orthogonal to the thickness direction (Z direction) of the membrane electrode assembly 43. The "outside" or "outer peripheral side" in the present description means a side away from the central portion C of the membrane electrode assembly 43 in a direction (e.g., the X direction or the Y direction) orthogonal to the thickness direction (the Z direction) of the membrane electrode assembly 43.

As illustrated in FIG. 4, the electrolytic cell 11 includes, for example, the support portion 70 and the sealing portion 80. The support portion 70 is a member supporting the membrane electrode assembly 43 inside the electrolytic cell 11. The sealing portion 80 is a member closing the internal space S between the first separator 41 and the second separator 42. These will be described below.

### Support Portion

The support portion 70 is disposed between the first separator 41 and the second separator 42. The support portion 70 is positioned more inside (inner peripheral side) than an outer edge portion 50e of the ion exchange membrane 50 and supports the ion exchange membrane 50. The "outer edge portion 50e" in the present description means an edge portion away from the central portion C of the membrane electrode assembly 43 in a direction (e.g., the X direction or the Y direction) orthogonal to the thickness direction (the Z direction) of the membrane electrode assembly 43. The "inside" or "inner peripheral side" in the present description means an inside (a side close to the central portion C) as viewed from the central portion C of the membrane electrode assembly 43. In the present embodiment, the support portion 70 includes, for example, a first support portion 71 and a second support portion 72.

### First Support Portion

The first support portion 71 is the support portion 70 on the cathode 47 side. The first support portion 71 is disposed between the first inner surface 41a of the first separator 41 and the first surface 50a of the ion exchange membrane 50. The first support portion 71 is positioned more inside (inner peripheral side) than the outer edge portion 50e of the ion exchange membrane 50. The first support portion 71 is held between the first inner surface 41a (or the first insulator 63) of the first separator 41 and the first surface 50a of the ion exchange membrane 50 at a position more outside (outer peripheral side) than the cathode catalyst layer 54 and the cathode feed conductor 55, and supports the ion exchange membrane 50 with respect to the first inner surface 41a of the first separator 41. The first support portion 71 has an annular shape (e.g., a frame shape) along the outer edge portion 50e of the ion exchange membrane 50, and is formed in an annular shape slightly smaller than the outer edge portion 50e of the ion exchange membrane 50.

### Second Support Portion

The second support portion 72 is the support portion 70 on the anode 48 side. The second support portion 72 is disposed between the second inner surface 42a of the second separator 42 and the second surface 50b of the ion exchange membrane 50. The second support portion 72 is positioned more inside (inner peripheral side) than the outer edge portion 50e of the ion exchange membrane 50. The second support portion 72 is held between the second inner surface 42a of the second separator 42 and the second surface 50b of the ion exchange membrane 50 at a position more outside (outer peripheral side) than the anode catalyst layer 56 and the anode feed conductor 57, and supports the ion exchange membrane 50 with respect to the second inner surface 42a of the second separator 42. The second support portion 72 has an annular shape (e.g., a frame shape) along the outer edge portion 50e of the ion exchange membrane 50, and is formed in an annular shape slightly smaller than the outer edge portion 50e of the ion exchange membrane 50.

### Sealing Portion

The sealing portion 80 is disposed between the first separator 41 and the second separator 42. The sealing portion 80 is positioned more outside (outer peripheral side) than the outer edge portion 50e of the ion exchange membrane 50, and seals the internal space S of the electrolytic cell 11. In the present embodiment, the sealing portion 80 includes a first sealing portion 81 and a second sealing portion 82. However, the first sealing portion 81 and the second sealing portion 82 may be integrally formed. That is, the first sealing portion 81 and the second sealing portion 82 may be one member. The sealing portion 80 may be formed integrally with at least one of the first insulator 63 and the second insulator 64 described above.

### First Sealing Portion

The first sealing portion 81 is the sealing portion 80 on the cathode 47 side. The first sealing portion 81 is positioned more outside (outer peripheral side) than the outer edge portion 50e of the ion exchange membrane 50. The first sealing portion 81 is held between the first inner surface 41a of the first separator 41 and the second sealing portion 82, and seals a part of the outer peripheral side of the internal space S. In the present embodiment, the first sealing portion 81 is held between the first insulator 63 attached to the first inner surface 41a and the second sealing portion 82. The first sealing portion 81 has an annular shape (e.g., a frame shape) along the outer edge portion 50e of the ion exchange membrane 50, and is formed in an annular shape slightly larger than the outer edge portion 50e of the ion exchange membrane 50.

### Second Sealing Portion

The second sealing portion 82 is the sealing portion 80 on the anode 48 side. The second sealing portion 82 is positioned more outside than the outer edge portion 50e of the ion exchange membrane 50. The second sealing portion 82 is held between the second inner surface 42a of the second separator 42 and the first sealing portion 81, and seals a part of the outer peripheral side of the internal space S. In the present embodiment, the second sealing portion 82 is held between the second insulator 64 attached to the second inner surface 42a and the first sealing portion 81. The second sealing portion 82 has an annular shape (e.g., a frame shape) along the outer edge portion 50e of the ion exchange membrane 50, and is formed in an annular shape slightly larger than the outer edge portion 50e of the ion exchange membrane 50.

### Method for Manufacturing Membrane Electrode Assembly

Next, a method for manufacturing the membrane electrode assembly 43 will be described.

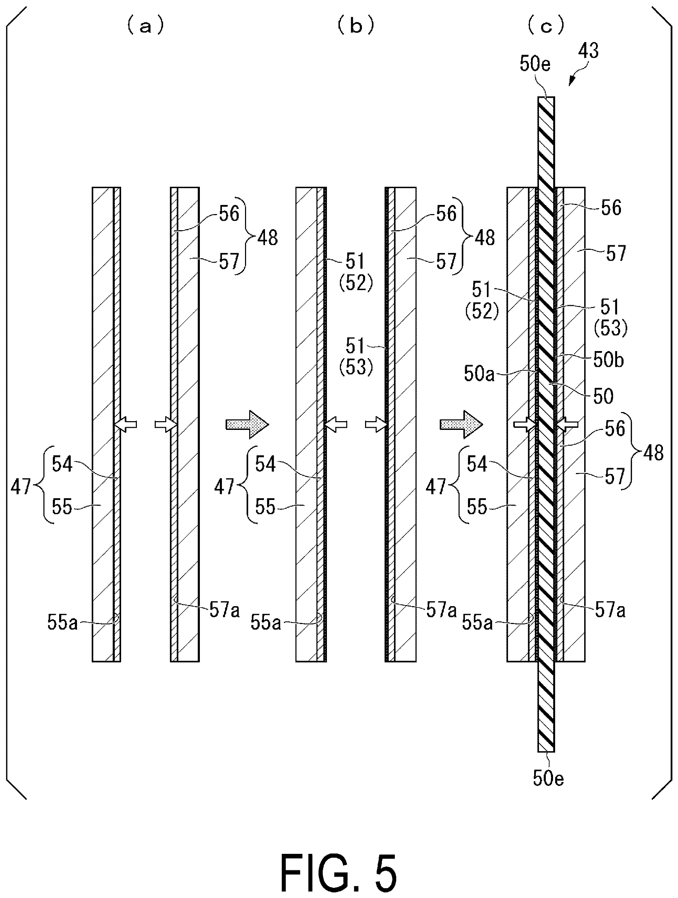

FIG. 5 is a cross-sectional view illustrating the method for manufacturing the membrane electrode assembly 43.

As illustrated in (a) of FIG. 5, the cathode surface 55a (one surface of the cathode feed conductor 55) of the cathode feed conductor 55 is provided with the cathode catalyst layer 54. The cathode catalyst layer 54 is formed, for example, by applying (coating) the cathode surface 55a of the cathode feed conductor 55 with the material of the cathode catalyst layer 54, and pressing the applied material of the cathode catalyst layer 54 and the cathode feed conductor 55 under a predetermined temperature and a predetermined pressure. Similarly, the anode surface 57a (one surface of the anode feed conductor 57) of the anode feed conductor 57 is provided with the anode catalyst layer 56. The anode catalyst layer 56 is formed, for example, by applying (coating) the anode surface 57a of the anode feed conductor 57 with the material of the anode catalyst layer 56, and pressing the applied material of the anode catalyst layer 56 and the anode feed conductor 57 under a predetermined temperature and a predetermined pressure. For application of the material of the cathode catalyst layer 54 and the material of the anode catalyst layer 56, for example, a coating method, a chemical vapor deposition (CVD) method, an electroless plating method, a method using catalyst ink, a method of applying a catalyst by spraying, or the like can be appropriately used.

Next, as illustrated in (b) of FIG. 5, the cathode catalyst layer 54 is provided with the first ionomer layer 52. The first ionomer layer 52 is formed, for example, by applying (coating) the cathode catalyst layer 54 with the material of the first ionomer layer 52, and pressing the applied material of the first ionomer layer 52 and the cathode catalyst layer 54 under a predetermined temperature and a predetermined pressure. Consequently, the first ionomer layer 52 separate from the cathode catalyst layer 54 is formed on the cathode catalyst layer 54. Similarly, the anode catalyst layer 56 is provided with the second ionomer layer 53. The second ionomer layer 53 is formed, for example, by applying (coating) the anode catalyst layer 56 with the material of the second ionomer layer 53, and pressing the applied material of the second ionomer layer 53 and the anode catalyst layer 56 under a predetermined temperature and a predetermined pressure. Consequently, the second ionomer layer 53 separate from the anode catalyst layer 56 is formed on the anode catalyst layer 56. For application of the material of the first ionomer layer 52 and the material of the second ionomer layer 53, for example, a coating method, a CVD method, an electroless plating method, a method using catalyst ink, a method of applying a catalyst by spraying, or the like can be appropriately used.

Next, as illustrated in (c) of FIG. 5, the first ionomer layer 52 formed on the cathode catalyst layer 54 is pressed at a predetermined temperature and a predetermined pressure in a state of being stacked on the first surface 50a of the ion exchange membrane 50, whereby the cathode 47 (the cathode catalyst layer 54 and the cathode feed conductor 55) and the ion exchange membrane 50 are joined to each other via the first ionomer layer 52. Similarly, the second ionomer layer 53 formed on the anode catalyst layer 56 is pressed by hot or cold pressing at a predetermined temperature and a predetermined pressure in a state of being stacked on the second surface 50b of the ion exchange membrane 50, whereby the anode 48 (the anode catalyst layer 56 and the anode feed conductor 57) and the ion exchange membrane 50 are joined to each other via the second ionomer layer 53. Consequently, the ionomer layer 51 (the first ionomer layer 52 and the second ionomer layer 53) described above is provided as a separate body from the cathode catalyst layer 54 and the anode catalyst layer 56 between the ion exchange membrane 50 and the cathode catalyst layer 54 and between the ion exchange membrane 50 and the anode catalyst layer 56, and forms a layered structure together with the cathode catalyst layer 54 and the anode catalyst layer 56. That is, the membrane electrode assembly 43 is completed.

### Operational Effects

As a comparative example, a structure in which the cathode catalyst layer 54 and the anode catalyst layer 56 are provided on both surfaces (the first surface 50a and the second surface 50b) of the ion exchange membrane 50 is considered. When the electrode catalyst layer is formed by coating or the like, the surface of the cathode catalyst layer 54 and the surface of the anode catalyst layer 56 joined to the ion exchange membrane 50 may be roughly formed. Therefore, in the membrane electrode assembly 43, a part where the cathode catalyst layer 54 and the anode catalyst layer 56 are in close contact with the ion exchange membrane 50 and a part where the cathode catalyst layer 54 and the anode catalyst layer 56 are not in close contact with the ion exchange membrane 50 may exist sparsely due to the surface roughness of the cathode catalyst layer 54 and the surface roughness of the anode catalyst layer 56. As a result, the contact resistance decreases in the part in close contact, and the current is locally concentrated, which may decrease the durability of the membrane.

On the other hand, in the present embodiment, the membrane electrode assembly 43 includes the ionomer layer 51 provided between the ion exchange membrane 50 and the cathode catalyst layer 54 and between the ion exchange membrane 50 and the anode catalyst layer 56 separately from the cathode catalyst layer 54 and the anode catalyst layer 56, and forming a layered structure together with the cathode catalyst layer 54 and the anode catalyst layer 56. According to such a configuration, when recesses are sparsely formed on the surface of the cathode catalyst layer 54 and the surface of the anode catalyst layer 56, the ionomer layer 51 (the first ionomer layer 52 and the second ionomer layer 53) is buried in the recesses on these surfaces. That is, the ion exchange membrane 50, the cathode catalyst layer 54, and the anode catalyst layer 56 are connected to each other via the ionomer layer 51 in a state where the recesses on the surface of the cathode catalyst layer 54 and the surface of the anode catalyst layer 56 are buried. Therefore, the contact resistance decreases between the cathode catalyst layer 54 and the ion exchange membrane 50 and between the anode catalyst layer 56 and the ion exchange membrane 50, thereby suppressing the current from concentrating. As a result, performance of the membrane electrode assembly 43 can be improved.

Since the present embodiment includes steps of providing the ionomer layer 51 provided in the cathode catalyst layer 54 to the first surface 50a of the ion exchange membrane 50 and providing the ionomer layer 51 provided in the anode catalyst layer 56 to the second surface 50b of the ion exchange membrane 50, the two ionomer layers 51 can be handled separately. Therefore, handling and the like in the manufacturing process can be easily performed, and productivity can be improved.

### Second Embodiment

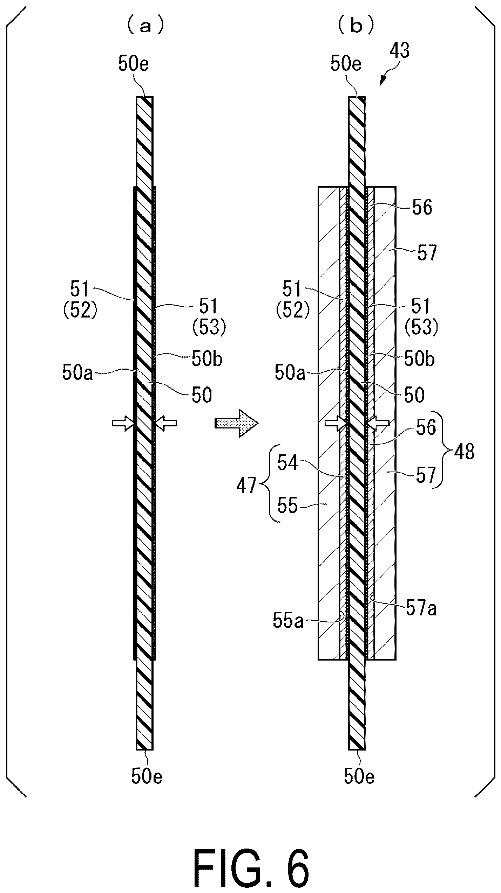

Next, the second embodiment will be described with reference to FIG. 6. FIG. 6 is a cross-sectional view illustrating a method for manufacturing the membrane electrode assembly 43 of the second embodiment. In the second embodiment, the method for manufacturing the membrane electrode assembly 43 is different from the method for manufacturing the membrane electrode assembly 43 described in the first embodiment.

First, as illustrated in (a) of FIG. 6, the first surface 50a of the ion exchange membrane 50 is provided with the first ionomer layer 52. The first ionomer layer 52 is formed, for example, by applying (coating) the first surface 50a of the ion exchange membrane 50 with the material of the first ionomer layer 52, and pressing the applied material of the first ionomer layer 52 and the ion exchange membrane 50 under a predetermined temperature and a predetermined pressure. Similarly, the second surface 50b of the ion exchange membrane 50 is provided with the second ionomer layer 53. The second ionomer layer 53 is formed, for example, by applying (coating) the second surface 50b of the ion exchange membrane 50 with the material of the second ionomer layer 53, and pressing the applied material of the second ionomer layer 53 and the ion exchange membrane 50 under a predetermined temperature and a predetermined pressure. For application of the material of the first ionomer layer 52 and the material of the second ionomer layer 53, for example, a coating method, a CVD method, an electroless plating method, a method using catalyst ink, a method of applying a catalyst by spraying, or the like can be appropriately used.

Next, as illustrated in (b) of FIG. 6, the cathode catalyst layer 54 provided on the cathode surface 55a of the cathode feed conductor 55 is stacked on the first ionomer layer 52 formed on the first surface 50a of the ion exchange membrane 50. Then, the cathode catalyst layer 54 stacked on the first ionomer layer 52 is pressed by hot or cold pressing at a predetermined temperature and a predetermined pressure, whereby the cathode 47 (the cathode catalyst layer 54 and the cathode feed conductor 55) and the ion exchange membrane 50 are joined to each other via the first ionomer layer 52. Consequently, the first ionomer layer 52 separate from the cathode catalyst layer 54 is formed on the cathode catalyst layer 54. Similarly, the anode catalyst layer 56 provided on the anode surface 57a of the anode feed conductor 57 is stacked on the second ionomer layer 53 formed on the second surface 50b of the ion exchange membrane 50. Then, the anode catalyst layer 56 stacked on the second ionomer layer 53 is pressed by hot or cold pressing at a predetermined temperature and a predetermined pressure, whereby the anode 48 (the anode catalyst layer 56 and the anode feed conductor 57) and the ion exchange membrane 50 are joined to each other via the second ionomer layer 53. Consequently, the second ionomer layer 53 separate from the anode catalyst layer 56 is formed on the anode catalyst layer 56. That is, the ionomer layer 51 (the first ionomer layer 52 and the second ionomer layer 53) described above is provided as a separate body from the cathode catalyst layer 54 and the anode catalyst layer 56 between the ion exchange membrane 50 and the cathode catalyst layer 54 and between the ion exchange membrane 50 and the anode catalyst layer 56, and forms a layered structure together with the cathode catalyst layer 54 and the anode catalyst layer 56. Note that a method for forming the cathode catalyst layer 54 to the cathode surface 55a of the cathode feed conductor 55 and a method for forming the anode catalyst layer 56 to the anode surface 57a of the anode feed conductor 57 may be the methods described above with reference to (a) of FIG. 5.

The membrane electrode assembly 43 described in the first embodiment can be completed also by the manufacturing method described in the present embodiment.

### Other Embodiments

Although the embodiments of the present disclosure have been described above in detail with reference to the drawings, the specific configuration is not limited to these embodiments, and includes design changes and the like without departing from the gist of the present disclosure.

For example, the method for manufacturing the membrane electrode assembly 43 described in the first embodiment and the second embodiment may include a process of independently molding the ionomer layer 51 before forming the ionomer layer 51. The "independently molding" mentioned here means molding only the ionomer layer 51 in an independent process without providing the material of the ionomer layer 51 on the cathode catalyst layer 54 and the anode catalyst layer 56 or the ion exchange membrane 50 by applying (coating) or the like. In this case, the two ionomer layers 51 may be independently molded, and then one molded ionomer layer 51 may be provided to each of the anode catalyst layer 56 and the cathode catalyst layer 54, or the molded ionomer layer 51 may be provided to each of the first surface 50a and the second surface 50b of the ion exchange membrane 50.

In the method for manufacturing the membrane electrode assembly 43 described in the first embodiment and the second embodiment, the anode catalyst layer 56 may be provided to the anode feed conductor 57 such that the area of the anode catalyst layer 56 is larger than the area of the cathode catalyst layer 54. In this case, the anode feed conductor 57 is formed to have the same size as that of the anode catalyst layer 56. That is, the area of the anode 48 is larger than the area of the cathode 47. Specifically, the area ratio (N/P ratio) of the anode 48 to the cathode 47 is, for example, larger than 1.0 and 1.3 or less.

### Supplementary Notes

The membrane electrode assembly 43 and the method for manufacturing the membrane electrode assembly 43 described in each embodiment are understood as follows, for example.
(1) A membrane electrode assembly 43 according to a first aspect includes an ion exchange membrane 50 having a first surface 50a and a second surface 50b positioned on an opposite side of the first surface 50a, a cathode catalyst layer 54 disposed further to the first surface 50a side than the ion exchange membrane 50, an anode catalyst layer 56 disposed further to the second surface 50b side than the ion exchange membrane 50, and an ionomer layer 51 provided so as to be separate from the cathode catalyst layer 54 and the anode catalyst layer 56 between the ion exchange membrane 50 and the cathode catalyst layer 54 and between the ion exchange membrane 50 and the anode catalyst layer 56, the ionomer layer 51 forming a layered structure together with the cathode catalyst layer 54 and the anode catalyst layer 56.

By this, when recesses are sparsely generated on the surface of the cathode catalyst layer 54 and the surface of the anode catalyst layer 56, the ionomer layer 51 enters the recesses on these surfaces. That is, the ion exchange membrane 50, the cathode catalyst layer 54, and the anode catalyst layer 56 are connected to each other via the ionomer layer 51 in a state where the recesses on the surface of the cathode catalyst layer 54 and the surface of the anode catalyst layer 56 are buried.

(2) A membrane electrode assembly 43 according to a second aspect is the membrane electrode assembly 43 of (1), in which the ionomer layer 51 may include an ionomer resin component and a non-ionomer resin component different from the ionomer resin component, and the ionomer resin component may be contained in the ionomer layer 51 at a proportion of 80 mass% or more and less than 100 mass%.

This can achieve the above operation with higher accuracy.

(3) A membrane electrode assembly 43 according to a third aspect is the membrane electrode assembly 43 of (2), in which the ionomer resin component may contain a composition having a composition identical to an additive contained commonly in each of the ion exchange membrane 50, the cathode catalyst layer 54, and the anode catalyst layer 56.

This can enhance close contact between the ionomer layer 51 and the ion exchange membrane 50, close contact between the ionomer layer 51 and the cathode catalyst layer 54, and close contact between the ionomer layer 51 and the anode catalyst layer 56.

(4) A membrane electrode assembly 43 according to a fourth aspect is the membrane electrode assembly 43 of (2) or (3), in which the non-ionomer resin component may contain an electrocatalyst particle and a binder.

This can enhance ion conductivity and close contact between the ionomer layer 51 and the ion exchange membrane 50, between the ionomer layer 51 and the cathode catalyst layer 54, and between the ionomer layer 51 and the anode catalyst layer 56.

(5) A membrane electrode assembly 43 according to a fifth aspect is the membrane electrode assembly 43 of any of (1) to (4), in which the ionomer layer 51 may have a thickness of 10% or more and 50% or less of a thickness of the cathode catalyst layer 54 and a thickness of the anode catalyst layer 56.

This can achieve the above operation with more specific setting.

(6) A membrane electrode assembly 43 according to a sixth aspect is the membrane electrode assembly 43 of any of (1) to (5), in which the ionomer layer 51 may have a thickness of 1 nm or more and 10 µm or less.

This can achieve the above operation with more specific setting.

(7) A method for manufacturing a membrane electrode assembly 43 according to a seventh aspect executes a step of providing an ionomer layer 51 on a cathode catalyst layer 54 formed on one surface (a cathode surface 55a) of a cathode feed conductor 55 and an anode catalyst layer 56 formed on one surface (an anode surface 57a) of an anode feed conductor 57, the ionomer layer 51 being separate from the cathode catalyst layer 54 and the anode catalyst layer 56, and a step of forming a layered structure by stacking the ionomer layer 51 provided on the cathode catalyst layer 54 on a first surface 50a of an ion exchange membrane 50, stacking the ionomer layer 51 provided on the anode catalyst layer 56 on a second surface 50b of the ion exchange membrane 50, the second surface 50b being positioned on an opposite side of the first surface 50a, and performing hot or cold pressing.

This enables the ionomer layer 51 provided on the cathode catalyst layer 54 and the ionomer layer 51 provided on the anode catalyst layer 56 to be handled separately. Therefore, handling and the like in the manufacturing process can be easily performed, and productivity can be improved.

(8) A method for manufacturing a membrane electrode assembly 43 according to an eighth aspect executes a step of providing an ionomer layer 51 on each of a first surface 50a of an ion exchange membrane 50 and a second surface 50b of the ion exchange membrane 50, the second surface 50b being positioned on an opposite side of the first surface 50a, and a step of forming a layered structure by stacking a cathode catalyst layer 54 provided on one surface (a cathode surface 55a) of a cathode feed conductor 55 on the ionomer layer 51 provided on the first surface 50a of the ion exchange membrane 50 so as to be separate from the ionomer layer 51, stacking an anode catalyst layer 56 provided on one surface of an anode feed conductor 57 on the ionomer layer 51 provided on the second surface 50b of the ion exchange membrane 50 so as to be separate from the ionomer layer 51, and performing hot or cold pressing.

This enables the membrane electrode assembly 43 to be manufactured.

(9) A method for manufacturing a membrane electrode assembly 43 according to a ninth aspect is the method for manufacturing the membrane electrode assembly 43 of (7) or (8), in which the membrane electrode assembly may be formed by executing a step of independently molding the ionomer layer 51 before execution of the step of providing the ionomer layer 51, and performing hot or cold pressing.

### Industrial Applicability

According to the present disclosure, it is possible to provide a membrane electrode assembly that can suppress concentration of contact resistance, and a method for manufacturing the membrane electrode assembly.

### Reference Signs List

1...Electrolyzer 10...Electrolytic cell stack 11...Electrolytic cell 20...Electrolyte supply unit 20a...Cathode side supply unit 20b...Anode side supply unit 21...Hydrogen gas-liquid separation device 22...First pump 23...Hydrogen recovery unit 24... First Electrolyte supply unit 26...Oxygen gas-liquid separation device 27...Second pump 28...Oxygen recovery unit 29...Second Electrolyte supply unit 30...Power supply unit 40...Electrolytic tank 41...First separator 41a...First inner surface 41b, 42b...Opposite surface of first inner surface, opposite surface of second inner surface 41e1, 42e1 First separator end portion 41e2, 42e2...Second separator end portion 42...Second separator 42a...Second inner surface 43...Membrane electrode assembly 47...Cathode 48...Anode 50...Ion exchange membrane 50a...First surface 50b...Second surface 50e...Outer edge portion 51...Ionomer layer 52...First ionomer layer 53...Second ionomer layer 54...Cathode catalyst layer 55...Cathode feed conductor 55a...Cathode surface 56...Anode catalyst layer 57...Anode feed conductor 57a...Anode surface 61...First current collector 62...Second current collector 63...First insulator 64...Second insulator 65...First insulation material 66...Second insulation material 67...First end plate 68...Second end plate 70...Support portion 71...First support portion 72...Second support portion 80......Sealing portion 81...First sealing portion 82...Second sealing portion C...Central portion FP1...First flow path FP2...Second flow path L1, L2, L3, L4...Pipe line S...Internal space Sa...Cathode chamber Sb...Anode chamber

## Claims

1. A membrane electrode assembly comprising:
an ion exchange membrane having a first surface and a second surface positioned on an opposite side of the first surface;
a cathode catalyst layer disposed further to the first surface side than the ion exchange membrane;
an anode catalyst layer disposed further to the second surface side than the ion exchange membrane; and
an ionomer layer provided so as to be separate from the cathode catalyst layer and the anode catalyst layer between the ion exchange membrane and the cathode catalyst layer and between the ion exchange membrane and the anode catalyst layer, the ionomer layer forming a layered structure together with the cathode catalyst layer and the anode catalyst layer.

2. The membrane electrode assembly according to claim 1, wherein
the ionomer layer includes
an ionomer resin component, and
a non-ionomer resin component different from the ionomer resin component, and
the ionomer resin component is contained in the ionomer layer at a proportion of 80 mass% or more and less than 100 mass%.

3. The membrane electrode assembly according to claim 2, wherein the ionomer resin component contains a composition having a composition identical to an additive contained commonly in each of the ion exchange membrane, the cathode catalyst layer, and the anode catalyst layer.

4. The membrane electrode assembly according to claim 2 or 3, wherein the non-ionomer resin component contains an electrocatalyst particle and a binder.

5. The membrane electrode assembly according to any one of claims 1 to 3, wherein the ionomer layer has a thickness of 10% or more and 50% or less of a thickness of the cathode catalyst layer and a thickness of the anode catalyst layer.

6. The membrane electrode assembly according to any one of claims 1 to 3, wherein the ionomer layer has a thickness of 1 nm or more and 10 µm or less.

7. A method for manufacturing a membrane electrode assembly that executes:
a step of providing an ionomer layer on a cathode catalyst layer formed on one surface of a cathode feed conductor and an anode catalyst layer formed on one surface of an anode feed conductor, the ionomer layer being separate from the cathode catalyst layer and the anode catalyst layer; and
a step of forming a layered structure by stacking the ionomer layer provided on the cathode catalyst layer on a first surface of an ion exchange membrane, stacking the ionomer layer provided on the anode catalyst layer on a second surface of the ion exchange membrane, the second surface being positioned on an opposite side of the first surface, and performing hot or cold pressing.

8. A method for manufacturing a membrane electrode assembly that executes:
a step of providing an ionomer layer on each of a first surface of an ion exchange membrane and a second surface of the ion exchange membrane, the second surface being positioned on an opposite side of the first surface; and
a step of forming a layered structure by stacking a cathode catalyst layer provided on one surface of a cathode feed conductor on the ionomer layer provided on the first surface of the ion exchange membrane so as to be separate from the ionomer layer, stacking an anode catalyst layer provided on one surface of an anode feed conductor on the ionomer layer provided on the second surface of the ion exchange membrane so as to be separate from the ionomer layer, and performing hot or cold pressing.

9. The method for manufacturing a membrane electrode assembly according to claim 7 or 8, wherein the membrane electrode assembly is formed by executing a step of independently molding the ionomer layer before execution of the step of providing the ionomer layer, and performing hot or cold pressing.
